# EUROPEAN PATENT APPLICATION

(11) **EP 2 253 728 A1**
(43) Date of publication of application: **24.11.2010**
(21) Application number: 09719774.3
(22) Date of filing: 09.03.2009
(51) Int. Cl.: C22C 38/00, C21D 1/06, C21D 9/40, C22C 38/18, C23C 8/32, F16C 33/32, F16C 33/34, F16C 33/62, F16C 33/64

(54) **ROLLING COMPONENT AND MANUFACTURING METHOD THEREOF**

(30) Priority: 10.03.2008 JP 2008059752
(71) Applicant: JTEKT Corporation, Osaka-shi Osaka 542-8502 (JP)
(72) Inventor: KIZAWA, Katsuhiko, Osaka-shi Osaka 542-8502 (JP); NISHIKAWA, Tomoaki, Tokai-shi Aichi 476-8666 (JP); UDAGAWA, Takeshi, Tokai-shi Aichi 476-8666 (JP)
(74) Representative: Hager, Thomas Johannes
(86) International application number: PCT/JP2009/054391
(87) International publication number: WO 2009/113477

(57) **Abstract**

A rolling part formed by performing spheroidizing annealing, processing, carbonitriding and finishing on a steel material containing C in an amount of 0.90 mass% to 1.10 mass%, Si in an amount of more than 0.35% and up to 0.70%, Mn in an amount of less than 0.80 mass%, Cr in an amount of 1.85 mass% to 2.50 mass%, O in an amount of 12 ppm or less, and the balance of Fe and unavoidable impurities. The mean C amount on a surface is from 1.20 mass% to 1.50 mass%, and the mean N amount is from 0.10 mass% to 0.60 mass%. Deposits having a particle size of 0.1 µm or more on the surface have a mean particle size of 0.6 µm or less, exist as 700,000 particles or more per mm², and have an area ratio of 10% or more. The amount of retained austenite of the surface is from 25% to 45% by volume ratio. The hardness of the surface is Hv 750 or more. The inside of the rolling part has an amount of retained austenite of 20% or less by volume ratio.

## Description

### Technical Field

The present invention relates to a rolling part and a manufacturing method thereof, and particularly to a rolling part suitable for use as a rolling part used in a lubricating environment and lubricating oil containing foreign matter, for example, such as an automotive drive transmitting unit, and a manufacturing method thereof.
Incidentally, in this specification and claims, the term "rolling part" refers to a part subjected to a rolling contact alone or a combination of a rolling contact and sliding contact.

### Background Art

As a rolling part used with a lubricating oil containing foreign matter, for example, a rolling/sliding part is known. The rolling/sliding part is manufactured by a carburizing process in which a part raw material obtained by processing bearing steel (high-carbon chromium bearing steel) such as JIS SUJ2 to have a predetermined shape by machining or the like is heated at 870°C for 3 hours or more in a carburizing atmosphere having a carbon potential of 1.2 wt% or more, a rapid cooling process, and then a tempering process. In the rolling/sliding part, the total carbon amount is 1.0 to 1.6 wt% in a range from a surface to a depth to which maximum shear stress is applied, and a carbide having a particle size of 3 µm or less is deposited in an amount of an area ratio of 5 to 20% in the surface layer portion.
Patent Document 1: JP-A-2004-52101

However, in order to suppress an increase in size of the part, it is demanded to deal with a severer use environment such as an increase in load applied to the rolling part or an elevation in use temperature, and higher performance than that of the rolling part described in patent document 1 is desired.

As a measure for prolonging the life of the rolling part under the lubricating environment containing foreign matter, it is conceivable that, for example, an amount of retained austenite of the surface layer is 30% or more. That is, it is known that a part processed to have a predetermined shape by machining or the like, using a steel material containing 3.2 to 5.0 wt% of Cr and at least one of M and V, is heated at 870 to 950°C in a carburizing atmosphere having a carbon potential of 1.0 to 1.5 wt% to perform carburizing process, and then, subjected to rapid cooling and tempering, whereby the mean carbide particle size on the surface layer portion is 0.2 to 0.4 µm, the surface ratio of the carbide is 9 to 30%, the hardness of the surface layer portion is 62 to 67 by Rockwell C, and the amount of retained austenite of the surface layer portion is 30 to 55% (see WO 2006/068205).

However, in this measure, the alloy part amount of the steel is much to increase material cost to JIS SUJ2, which causes a problem of impairing economical versatility. Further, a reduction in alloy amount has been demanded also from the viewpoint of earth resource environment. On the other hand, from the viewpoint of energy saving, a decrease in treating temperature is desired for restraining carburizing cost. From these environments, there is strongly desired a rolling part performed by a manufacturing method that maximizes its function using a steel material having optimum chemical parts without causing a more substantial alloy increase than JIS SUJ2.

### Disclosure of the Invention

### Problems to be solved by the Invention

The invention has been made in view of such conventional problems, and aims at providing a rolling part that can achieve prolonged life without a large cost increase even when applied as a rolling part used in a lubricating environment containing foreign matter, and a manufacturing method thereof.

### Means for Solving the Problems

According to a first invention, a rolling part comprises a rolling element and a rolling raceway member,
wherein the rolling part is formed by performing spheroidizing annealing, processing, carbonitriding and finishing on a steel material containing C in an amount of 0.90 mass% to 1.10 mass%, Si in an amount of more than 0.35 mass% and up to 0.70 mass%, Mn in an amount of less than 0.80 mass%, Cr in an amount of 1.85 mass% to 2.50 mass%, O in an amount of 12 ppm or less, and a balance of Fe and unavoidable impurities,
wherein a surface of the rolling part contains C in a mean amount of 1.20 mass% to 1.50 mass% and N in a mean amount of 0.10 mass% to 0.60 mass%,
wherein a mean particle size of a carbide, a nitride and a carbonitride as deposits having a particle size of 0.1 µm or more in the surface is 0.6 µm or less, a number thereof is 700,000 particles or more per mm², and an area ratio thereof is 10% or more,
wherein an amount of retained austenite of the surface is from 25 % to 45 % by volume ratio,
wherein a hardness of the surface is Hv 750 or more, and
wherein an uncarbonitrided layer in an inside of the rolling part contains an amount of retained austenite of 20% or less by volume ratio.

The rolling part is formed by the steel including a surface layer portion carbonitrided at the surface and the uncarbonitrided layer not affected by carbonitriding.
The surface of the surface layer portion contains C in a mean amount of 1.20 mass% to 1.50 mass%, and N in a mean amount of 0.10 mass% to 0.60 mass%. The mean particle size of deposits having a particle size of 0.1 µm or more in the surface is 0.6 µm or less, the number of the deposits is 700,000 particles or more per mm², and an area ratio of the deposits is 10% or more. The amount of retained austenite of the surface is from 25% to 45% by volume ratio, and the hardness of the surface is Hv 750 or more.
As used herein, the term "surface" corresponds to a portion containing clearly large amounts of C and N by carbonitriding, when compared with the inside, and a depth portion exerting an influence on the life in rolling For example, in the rolling part used in the oil containing foreign matter, the surface corresponds to a portion in a range of 0 to 50 µm with reference to an outermost surface after finish processing. The term "surface layer portion" means a range affected by carbonitriding.

The steel material preferably contains Cr in an amount of 2.20 mass% or less.

The mean amount of N in the surface of the rolling part is preferably 0.30 mass% or less.

The amount of retained austenite of the surface of the rolling part is preferably 40% or less by volume ratio.

The amount of retained austenite of the inside of the rolling part is preferably 15% or less by volume ratio.

By optimizing the amount of retained austenite of the surface, stress concentration caused by surface damages due to foreign matter is reduced to improve the rolling life.
Further, by optimizing the mean particle size of the deposits having a particular particle size, the number thereof per mm² and the area ratio, the material strength of the rolling part can be improved.
Further, by securing the hardness of the surface, the function of the rolling part can be maintained and expressed, and the damages can be inhibited even in a lubricating environment containing foreign matter.

Furthermore, the uncarbonitrided layer in the inside of the rolling part is one in which the amount of retained austenite is made 20% or less by volume ratio. In addition, the hardness of the uncarbonitrided layer is desirably Hv 700 or more.

Accordingly, even when a large amount of soft retained austenite exists in the surface, the deposits having the optimum size deposits on the surface in large amounts to secure the hardness of the surface. Consequently, damages under lubrication containing foreign matter can be prevented, thereby improving the life. Further, by suppressing the amount of retained austenite of the inside, secular distortion of the part can be suppressed, and it becomes possible to produce the excellent rolling part.

The rolling part is uses the steel material containing C in an amount of 0.90 mass% to 1.10 mass%, Si in an amount of more than 0.35% and up to 0.70 mass%, Mn in an amount of less than 0.80 mass%, Cr in an amount of 1.85 mass% to 2.50 mass%, O in an amount of 12 ppm, and the balance of Fe and unavoidable impurities. In addition, increases in weight of alloy elements are kept to the minimum for improvement of the life. Consequently, there is no large increase in material cost.

Accordingly, the invention can provide the rolling part that can suppress the secular distortion or distortion or breakage due to a load without a large increase in cost, and can achieve the prolonged life.

The second invention is a method for manufacturing a rolling part comprising a rolling element and a rolling raceway member, the method comprises:
a spheroidizing annealing step of performing spheroidizing annealing on a steel material containing C in an amount of 0.90 mass% to 1.10 mass%, Si in an amount of more than 0.3 mass5% and up to 0.70 mass%, Mn in an amount of less than 0.80 mass%, Cr in an amount of 1.85 mass% to 2.50 mass%, O in an amount of 12 ppm or less, and the balance of Fe and unavoidable impurities,
a processing step of forming the steel material into a predetermined shape,
a carbonitriding step of performing a treatment at 2 % to 10 % of a ratio of NH₃ gas flow rate to carburizing converted gas flow rate at 830°C to 880°C for 3 hours or more, and
a finishing step.

According to the rolling part manufacturing method, there can be produced the rolling part that can achieve the prolonged life without a large increase in cost even when the rolling part is applied as a rolling part used in the lubricating environment containing foreign matter.

### Brief Description of the Drawings

Fig. 1 is a graph showing a heat pattern when the carbonitriding temperature is 850°C or more in Example 1.
Fig. 2 is a graph showing a heat pattern when the carbonitriding temperature is less than 850°C in Example 1.

### Best Mode for Carrying Out the Invention

The rolling part of the first invention is formed by performing spheroidizing annealing, processing, carbonitriding and finishing on a steel material containing C in an amount of 0.90 mass% to 1.10 mass%, Si in an amount of more than 0.35 mass% and up to 0.70 mass%, Mn in an amount of less than 0.80 mass%, Cr in an amount of 1.85 mass% to 2.50 mass%, O in an amount of 12 ppm or less, and the balance of Fe and unavoidable impurities, as described above.

In the steel material, C content is set 0.90 % to 1.10 %. C is an element indispensable for securing the strength as a bearing after rapid cooling (hardening) and tempering after carbonitriding has been performed. Further, after spheroidizing annealing, a large amount of spherodized carbides remains, and the spherodized carbides become deposit nuclei at the time of carbonitriding to form deposits, thereby precipitation hardening a matrix and also inhibiting aggregation growth of the carbides. For this reason, the lower limit was set at 0.90 %. However, excessive addition thereof is likely to form coarse eutectic carbides that may become starting points of fatigue breaking, and also increases the hardness of the material which causes an adverse influence on machinability at the time of formation into a predetermined shape before carbonitriding. Accordingly, the upper limit was set at 1.10%.

Si is contained in an amount of more than 0.35 % and up to 0.70 %. Si is an element necessary for deoxidation at the time of refining of the steel. Furthermore, Si has a property of hardly forming the solid solution in the carbides, so that an effect of inhibiting coarse growth of the carbides can be expected. For this reason, addition exceeding 35% is necessary. However, Si strengthens ferrite, so that it exerts an adverse influence on machinability at the time of formation to a predetermined shape before carbonitriding. Accordingly, the upper limit was made 0.70 %.

Still further, Mn is contained in an amount of less than 0.80 %. Mn is an element for securing and improving hardenability of the steel, and also stabilizing an austenite structure, thereby increasing the amount of retained austenite after hardening. The addition of Mn is preferable. However, excessive addition of Mn increases the amount of retained austenite in a carbonitriding region, which causes an adverse influence on dimensional stability of the rolling part, and also deteriorates productivity such as hot processability. Accordingly, the upper limit was made less than 0.80 %.

Cr is contained in an amount of 1.85 % to 2.50 %. Cr is an element for securing and improving hardenability of the steel. Also, Cr is a carbonitride-forming element, and an element indispensable such that a large amount of spherodized carbides remains after spheroidizing annealing, the spherodized carbides become deposit nuclei at the time of carbonitriding so that the formation of coarse deposits can be inhibited, and large amount of deposits are formed In order to sufficiently obtain the above-mentioned effects, addition of 1.85 % or more is necessary. On the other hand, excessive addition increases material cost, and also is likely to form the coarse eutectic carbides that may become starting points of fatigue breaking. Accordingly, the upper limit was set 2.50 %. Furthermore, for the same reason, more preferably, the upper limit is 2.20 % or less.

O is contained in an amount of 12 ppm or less. Much O is bound to Al or Ca to form oxide-based inclusions, which exist in the steel. These oxide-based inclusions are known to become starting points of separation (surface breaking) at the time of rolling fatigue, and decrease the rolling fatigue life. Consequently, the upper limit was set 12 ppm.

The rolling part is formed by performing spheroidizing annealing, processing, carbonitriding and finishing on the steel material having the above-mentioned composition. Specifically, the rolling part can be produced, for example, by the manufacturing method of the rolling part according to the second invention, which is described later.

A surface of the rolling part contains C in a mean amount of 1.20 mass% to 1.50 mass% and N in a mean amount of 0.10 mass% to 0.60 mass%.
The mean amount of C and mean amount of N each means a mean of a total of the matrix solid solution content and the deposits.
The amount of C and the amount of N can be measured by concentration measurement according to EPMA analysis.

In the invention, particularly, in order to prolong the life in a lubricating environment containing foreign matter, securement of the amount of retained austenite in the surface and the deposits for supplementing the strength of the soft structure are indispensable. In order to form a carbide, a nitride and a carbonitride as the deposits in a large amount by carbonitriding, 1.20 % or more of C and 0.10 % or more of N are necessary at least in the surface receiving rolling fatigue. However, when the amounts of C and N increase, the deposits coarsely grow which results in failure to obtain the long life, and also the amount of soft retained austenite becomes excessive which results in difficulty to obtain the sufficient material strength. Accordingly, the upper limit is set 1.50 % or less for C and 0.60 % or less for N. However, for the same reason, more preferably, the upper limit is 0.30% or less for N.

Further, the deposits (carbide, nitride and carbonitride) having a particle size (means an equivalent circle diameter, hereinafter the same) of 0.1 µm or more in the surface have a mean particle size of 0.6 µm or less.
As described above, a large amount of deposits is indispensable for improving the material strength. However, the deposits having a particle size of less than 0.1 µm are difficult to be accurately measured by a relatively simplified means such as a scanning electron microscope or an optical microscope. Accordingly, the deposits to be measured were limited to deposits having a particle size of 0.1 µm or more, and the upper limit of the mean particle size thereof was set 0.6 µm. That is, this is because coarsened deposits decrease strengthening function.
The particle size of the deposits can be measured by image analysis from observation under an SEM.

There are 700,000 particles or more per mm² of deposits having a particle size of 0.1 µm or more in the surface.
In the invention, the surface of the rolling part maintains a high hardness while securing a large amount of retained austenite, and improvement in strength by the deposits becomes indispensable. Accordingly, it is necessary to be 700,000 particles or more per mm².

The area ratio of the deposits having a particle size of 0.1 µm or more in the surface is 10 % or more.
That is, in order to improve the material strength by the deposits, an amount of the deposits is preferably large. In other words, it means that the area ratio of the deposits is large, and in order to obtain the effect, the area ratio is 10% or more.

The amount of retained austenite of the surface is from 25% to 45% by volume ratio.
It is known that the retained austenite structure of the surface of the rolling part reduces stress concentration caused by surface damages due to foreign matter, thereby improving the rolling life in the lubricating environment containing foreign matter. In order to obtain the effect, it is necessary to contain the retained austenite in an amount of 25% or more by volume ratio. However, the retained austenite structure is soft, so that when the amount of retained austenite becomes large, it becomes difficult to secure the hardness and strength necessary as the rolling part. Accordingly, the upper limit was set 45%. Further, for the same reason, more preferably, the upper limit of the amount of retained austenite of the surface is set 40%. Measurement of the amount of retained austenite can be made by calculation from the peak intensity ratio by X-ray diffraction.

The hardness of the surface is Hv 750 or more.
In order that the rolling part maintains and exhibits its function, it is important that the rolling part has a high hardness. Furthermore, in the lubricating environment containing foreign matter, foreign matter is stuck between the rolling element and a rolling contact surface, thereby causing the occurrence of damages accompanied by plastic deformation on the rolling contact surface. In order to inhibit these damages, the hardness is required to be higher, and the hardness is set up to 750 in Vickers hardness.
Since the rolling contact surface has curvature, the surface hardness thereof cannot be measured, so that it is substituted by the hardness at a position 50 µm below the surface in cross section.

The inside (uncarbonitrided layer) of the rolling part contains an amount of retained austenite of 20 % or less by volume ratio.
The rolling part is generally used for a long period of time, and it is necessary to suppress the secular distortion for maintaining its function. When a large amount of retained austenite exists, secular distortion characteristics are deteriorated, because the retained austenite structure is soft. The carbonitriding according to the invention modifies only the surface layer of the rolling part, and the properties of the inside, i.e., the uncarbonitrided region, exerts a large influence on the secular distortion. For this reason, the upper limit of the amount of retained austenite of the inside is set 20%. However, the amount of retained austenite of the inside exceeds 15%, the secular distortion somewhat increases. Accordingly, it is preferable that the upper limit is made 15%.

Preferably, that the inside of the rolling part has a hardness of Hv 700 or more.
The rolling part supports a large load in many cases, and it is necessary to suppress distortion or breakage caused by the load. For this purpose, it is necessary to secure the strength of the inside, i.e., the uncarbonitrided region. Accordingly, the hardness of the inside is preferably 700 or more in Vickers hardness.

The manufacturing method of the rolling part of the second invention includes a spheroidizing annealing step of performing spheroidizing annealing on a steel material containing C in an amount of 0.90 mass% to 1.10 mass%, Si in an amount of more than 0.35 mass% and up to 0.70 mass%, Mn in an amount of less than 0.80 mass%, Cr in an amount of 1.85 mass% to 2.50 mass%, O in amount of 12 ppm or less, and the balance of Fe and unavoidable impurities. The spheroidizing annealing step is performed for improving processability. The spheroidizing annealing step can provide a state in which a large amount of deposits exist (a spheroidized annealed structure).
The reason for limiting the components of the steel material is the same as in the case of the invention of claim 1.
The steel material contains a large amount, about 1.00 %, of C, so that it is necessary to form the spheroidized annealed structure in order to secure formability by cold working or machining. Further, the carbide of spheroidized annealed structure is not likely to form a solid solution at the time of heating, as compared with pearlite (a carbide of layered structure). Accordingly, it becomes easy to allow a large amount of spherodized carbides to remain and to act as nuclei of the deposits at the time of carbonitriding.

As a state of the carbides after carbonitriding, it is preferable that the number of deposited particles of the carbides having a size of 0.1 µm or more and a mean particle size of 0.1 to 0.5 µm is 1,500,000/mm² or more. In order to obtain such a fine deposition state, it is necessary to perform heating up to a temperature in the vicinity of 800°C and to perform slow cooling at a rate as slow as 25°C/hr or less. By carbonitriding (described later) the steel material processed to have such a deposition state, the part including the surface having the large amount of deposits therein can be obtained, as recited in claim 1.

Further, the manufacturing method of the rolling part of the second invention includes a processing step of forming the steel material into a predetermined shape by plastic processing, machining or the like.
Thereafter, it has a carbonitriding step of performing a treatment at 2 % to 10 % of a ratio of NH₃ gas flow rate to carburizing converted gas flow rate of at 830°C to 880°C for 3 hours or more.
The carbonitriding is a surface modification heat treatment in which C and N are introduced into the surface layer of the steel material from the surface by diffusion. That is, carbon and nitrogen that enter from the surface of the material deposit as the deposits such as the carbide, the nitride and the carbonitride. At that time, a large amount of spherodized carbides, which have been deposited in the spheroidizing annealing, also partially remain without forming a solid solution during carbonitriding. The spherodized carbides become deposit nuclei, which makes possible fine deposition of the deposits, and also suppresses the formation of coarsened deposits. The life in the environment containing foreign matter can be improved by that effect.
It can be confirmed how many carbides existing prior to carbonitriding remain during carbonitriding by measuring the number of the deposited particles of the deposits in the uncarbonitrided layer after the treatment. Consequently, it is necessary to adjust the treating temperature so that this deposited particle number becomes an appropriate numerical value.

When the temperature of the carbonitriding is too low, the diffusion of C and N becomes difficult. Taking the cost for surface processing by finishing process into consideration, it is necessary to prolong the carbonitriding time, which results in deterioration of productivity. Accordingly, the lower limit was set 830°C. When the temperature of the carbonitriding is too high, decomposition of ammonia introduced for nitriding is accelerated to necessitate a large amount of ammonia, which results in economical disadvantage Further, the coarse growth of the deposits due to C and N that have entered into the steel surface is accelerated, which results in the difficulty of exhibiting a deposition-enhancing function. Accordingly, the upper limit was set 880°C.

The NH₃ gas is necessary for allowing N to enter into the steel surface by mixing the NH₃ gas in the atmosphere together with a carburizing gas, and in order to obtain the effective N amount, a flow rate of 2% or more and a treating time of 3 hours or more are required. Further, the flow rate of the NH₃ gas is preferably 3% or more. However, when the flow rate of the NH₃ gas is too much, the effect thereof tends to be saturated, which is uneconomical. Accordingly, the upper limit is set 10%. However, the longer the treating time is, the more C and N are diffused in the steel inside. It is therefore possible to prolong the time as needed.
Finally, the finishing step such as polishing is performed to complete the part.

### Examples

### (Example 1)

In this Example, examples according to a rolling part and a manufacturing method thereof of the invention will be described.
In this Example, 14 kinds of steel materials (steel A to steel N) shown in Table 1 were prepared, rolling parts (sample E1 to sample E5) shown in Table 2 were prepared as examples of the invention, and rolling parts (sample C1 to sample C16) shown in Table 3 were prepared as comparative examples. Then, a dimensional change test and a life test were performed.

Each of the rolling parts (sample E1 to sample E5) of this Example is a rolling part having a rolling element and a rolling raceway member, and formed by performing spheroidizing annealing, processing, carbonitriding and finishing on a steel material containing C in an amount of 0.90 mass% to 1.10 mass%, Si in an amount of more than 0.35 mass% and up to 0.70 masss%, Mn in an amount of less than 0.80 mass%, Cr in an amount of 1.85 mass% to 2.50 mass%, O in an amount of 12 ppm or less, and the balance of Fe and unavoidable impurities.
The surface of the rolling part contains C in a mean amount of 1.20 mass% to 1.50 mass% and N in a mean amount of 0.10 mass% to 0.60 mass% in the surface. A mean particle size of deposits (a carbide, a nitride and a carbonitride) having a particle size of 0.1 µm or more on the surfaces is 0.6 µm or less, the number thereof is 700,000 particles or more per mm², and an area ratio thereof is 10% or more.
The amount of retained austenite of the surface is from 25% to 45% by volume ratio, and the hardness of the surfaces is Hv 750 or more.
The uncarbonitrided layer in inside of the rolling part contains an amount of retained austenite of 20% or less by volume ratio.

Specific examples of the invention will be described together with comparative examples.
First, 14 kinds of steel materials having compositions shown in Table 1 were prepared, and spheroidizing annealing was performed on the steel materials from the necessity of obtaining the state where large amount of carbides was deposited before carbonitriding, in order to obtain excellent processability and high strength after carbonitriding, as described above.

[Table 1]

**(Table 1)**

| Kind of Steel | Composition C | | | | |
|---|---|---|---|---|---|
| | (mass%) | Si (mass%) | Mn (mass%) | Cr (mass%) | O (ppm) |
| Steel A | 1.00 | 0.48 | 0.41 | 1.98 | 6 |
| Steel B | 1.08 | 0.52 | 0.54 | 2.01 | 6 |
| Steel C | 0.92 | 0.70 | 0.40 | 1.90 | 8 |
| Steel D | 1.00 | 0.38 | 0.79 | 2.00 | 12 |
| Steel E | 1.01 | 0.50 | 0.41 | 2.48 | 7 |
| Steel F | 1.01 | 0.25 | 0.40 | 1.48 | 8 |
| Steel G | 0.75 | 0.36 | 0.50 | 1.90 | 8 |
| Steel H | 1.25 | 0.40 | 0.60 | 2.20 | 10 |
| Steel I | 1.03 | 0.21 | 0.41 | 2.00 | 10 |
| Steel J | 1.00 | 0.98 | 0.40 | 2.20 | 10 |
| Steel K | 1.00 | 0.48 | 0.92 | 2.00 | 8 |
| Steel L | 1.08 | 0.35 | 0.29 | 1.71 | 8 |
| Steel M | 0.95 | 0.50 | 0.49 | 2.65 | 10 |
| Steel N | 1.00 | 0.50 | 0.41 | 2.03 | 15 |

In Table 1, the balance of all steels consists of Fe and unavoidable impurities.

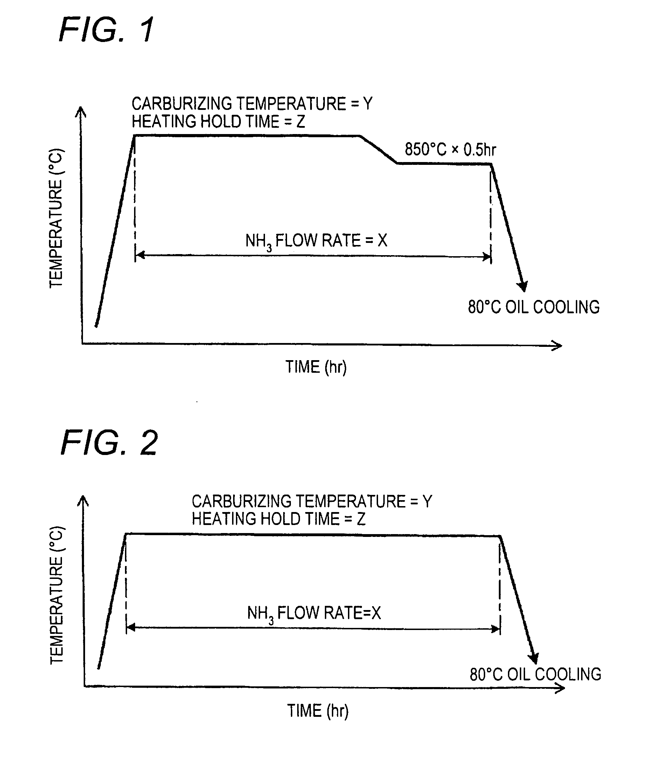

Then, using the steel materials (steel A to steel N), 21 kinds of inner ring materials (inside diameter ϕ: 30 mm, outside diameter ϕ: 62 mm, thickness: 16 mm) used in a rolling bearing of model number 6206 were formed. Thereafter, carbonitriding was performed on the inner ring materials under conditions shown in Table 2, Table 3, Fig. 1 and Fig. 2. Then, finishing by polishing was performed, thereby preparing inner rings (sample E1 to sample E5 and sample C1 to sample C16). In order to measure the deposited particle number of the carbides after spheroidizing annealing and before carbonitriding, test pieces before carbonitriding were observed under a scanning electron microscope, enlarged by a factor of 10,000, so as to measure the particle number of the deposits having a particle size of 0.1 µm or more.

[Table 2]

**(Table 2)**

| Sample No. | Kind of Steel | Carbonitriding | | | Surface of Rolling Component | | | | | | | | Inside | Rate of Dimensional Change (%) | Life |
|---|---|---|---|---|---|---|---|---|---|---|---|---|---|---|---|
| | | Carburizing Temperature Y (°C) | NH₃ Flow Rate X (%) | Time Z (hr) | Mean C Amount (%) | Mean N Amount (%) | C+N Amount (%) | Deposits with Particle Size of 0.1 µm or More | | | Retained Y Amount (%) | Hardness (Hv) | Retained Y Amount (%) | | Standard Bearing Ratio |
| | | | | | | | | CN Mean Particle Size (µm) | CN Particle Number (10,000 particles) | CN Area Ratio (calculated) | | | | | |
| E1 | Steel A | 850 | 10 | 7 | 1.35 | 0.15 | 1.50 | 0.53 | 105 | 11.8 | 32 | 796 | 8 | 0.075 | 5.8 |
| E2 | Steel B | 880 | 10 | 7 | 1.44 | 0.27 | 1.71 | 0.58 | 125 | 15.0 | 36 | 768 | 10 | 0.080 | 8.0 |
| E3 | Steel C | 830 | 3 | 3 | 1.24 | 0.12 | 1.36 | 0.46 | 75 | 10.5 | 23 | 760 | 7 | 0.068 | 5.5 |
| E4 | Steel D | 850 | 10 | 5 | 1.43 | 0.29 | 1.72 | 0.53 | 130 | 14.3 | 39 | 754 | 16 | 0.110 | 7.3 |
| E5 | Steel E | 850 | 5 | 5 | 1.40 | 0.19 | 1.59 | 0.56 | 105 | 13.2 | 33 | 768 | 12 | 0.075 | 6.0 |

[Table 3]

**(Table 3)**

| Sample No. | Kind of Steel | Carbonitriding | | | Surface of Rolling Component | | | | | | | | Inside | Rate of Dimensional Change (%) | Life |
|---|---|---|---|---|---|---|---|---|---|---|---|---|---|---|---|
| | | Carburizing Temperature Y (°C) | NH₃ Flow Rate X (%) | Time Z (hr) | Mean C Amount (%) | Mean N Amount (%) | C+N Amount (%) | Deposits with Particle Size of 0.1 µm or More | | | Retained Y Amount (%) | Hardness (Hv) | Retained γ Amount (%) | | Standard Bearing Ratio |
| | | | | | | | | CN Mean Particle Size (µm) | CN Particle Number (10,000 particles) | CN Area Ratio (calculated) | | | | | |
| C1 | Steel F | 850 | 10 | 5 | 1.26 | 0.14 | 1.40 | 0.52 | 65 | 8.8 | 28 | 760 | 12 | 0.100 | 3.3 |
| C2 | Steel G | 850 | 5 | 7 | 1.21 | 0.12 | 1.33 | 0.50 | 65 | 7.9 | 31 | 752 | 7 | 0.072 | 3.8 |
| C3 | Steel H | 880 | 10 | 5 | 1.62 | 0.26 | 1.88 | 0.76 | 95 | 15.5 | 39 | 760 | 18 | 0.130 | 3.5 |
| C4 | Steel I | 850 | 3 | 7 | 1.59 | 0.22 | 1.81 | 0.68 | 90 | 13.2 | 38 | 751 | 8 | 0.084 | 3.8 |
| C5 | Steel J | 850 | 10 | 3 | 1.11 | 0.04 | 1.15 | 0.45 | 55 | 8.2 | 26 | 742 | 6 | 0.065 | 3.0 |
| C6 | Steel K | 850 | 10 | 5 | 1.44 | 0.32 | 1.76 | 0.57 | 110 | 13.3 | 56 | 723 | 24 | 0.180 | 3.3 |
| C7 | Steel L | 850 | 5 | 3 | 1.22 | 0.12 | 1.34 | 0.53 | 60 | 7.5 | 26 | 755 | 9 | 0.083 | 3.3 |
| C8 | Steel M | 830 | 10 | 5 | 1.58 | 0.22 | 1.80 | 0.72 | 85 | 14.2 | 29 | 757 | 6 | 0.065 | 3.5 |
| C9 | Steel N | 880 | 10 | 7 | 1.34 | 0.25 | 1.59 | 0.51 | 110 | 12.1 | 32 | 755 | 8 | 0.092 | 2.3 |
| C10 | Steel A | 810 | 10 | 7 | 1.15 | 0.13 | 1.28 | 0.55 | 85 | 10.1 | 21 | 750 | 8 | 0.078 | 3.5 |
| C11 | Steel C | 900 | 5 | 5 | 1.51 | 0.08 | 1.59 | 0.72 | 80 | 14.1 | 26 | 765 | 8 | 0.081 | 3.3 |
| C12 | Steel D | 850 | 1 | 7 | 1.30 | 0.06 | 1.36 | 0.51 | 85 | 10.4 | 28 | 772 | 18 | 0.140 | 3.0 |
| C13 | Steel A | 850 | 10 | 1 | 1.13 | 0.04 | 1.17 | 0.49 | 40 | 4.2 | 18 | 736 | 8 | 0.091 | 2.8 |
| C14 | Steel A | 850 | 0 | 7 | 1.32 | 0.00 | 1.32 | 0.51 | 90 | 10.7 | 22 | 766 | 8 | 0.100 | 3.8 |
| C15 | Steel F | 850 | 0 | 7 | 1.28 | 0.00 | 1.28 | 0.54 | 50 | 8.1 | 14 | 771 | 7 | 0.140 | 2.5 |
| C16 | Steel F | 0 | 0 | 0 | 1.01 | 0.00 | 1.01 | 0.42 | 30 | 4.6 | 10 | 753 | 10 | 0.110 | 1.0 |

Heat treatment condition 1 shown in Fig. 1 indicates a heat pattern in the case where the carbonitriding temperature is 850°C or more. In the heat treatment condition 1, after holding a heating in a carbonitriding atmosphere with a NH₃ flow rate of X at a carburizing temperature of Y for Z hours, subsequent to the heating, a heating is held in the carbonitriding atmosphere with a NH₃ flow rate of X at 850°C for 0.5 hour, and then an oil cooling to 80°C is performed.

Heat treatment condition 2 shown in Fig. 2 indicates a heat pattern in the case where the carbonitriding temperature is less than 850°C. In the heat treatment condition 2, holding a heating is performed in a carbonitriding atmosphere with a NH₃ flow rate of X at a carburizing temperature of Y for Z hours, and then an oil cooling to 80°C is performed.
The values of the NH₃ flow rate X, treating temperature Y and treating time Z are each shown in Table 2 and Table 3.
In the heat treatment conditions described above, there is finally performed tempering in which after holding under heating at 200°C for 2 hours, air cooling is performed, although not shown in the drawings.

For the inner rings of examples (sample E1 to sample E5) and comparative examples (sample C1 to sample C16) thus manufactured, the mean C amount and mean N amount in the surface, the mean particle size, the number of particles per mm² and the area ratio, of the deposits having a particle size of 0.1 µm or more in the surface, the amount of retained austenite of the surface, the surface hardness and the amount of retained austenite of the inside of the inner ring were each measured. The results thereof are shown in Table 2 and Table 3.

### <Mean C Amount and Mean N Amount in Surface>

Measurement of the mean C amount and the mean N amount was made by concentration measurement according to EPMA analysis.

<Mean Particle Size, Number of Particles per mm² and Area Ratio, of Deposits Having Particle Size of 0.1 µm or More on Surface>
Measurement of the mean particle size, the number of particles per mm² and the area ratio, of the deposits having a particle size of 0.1 µm or more in the surface was made by image analysis from observation under a scanning electron microscope (SEM).

### <Amount of Retained Austenite>

Measurement of the amount of retained austenite was calculated by the peak intensity ratio according to X-ray diffraction.

### <Hardness>

With respect to the rolling contact surface, the surface hardness cannot be measured because of its curvature. Accordingly, the surface hardness was evaluated by measuring the Vickers hardness at a position 50 µm below the surface in cross section.

Further, in order to confirm the deposition state of the deposits also after carbonitriding, similarly to the case before carbonitriding, the deposited particle number of the uncarbonitrided layer was measured under a scanning electron microscope (10,000 magnifications). As described above, whether the degree of deposition and solid solution at the carbonitriding as a result of an adjustment of the carbonitriding temperature is optimum or not can be determined by simply measuring the deposited particle number of the deposits in the uncarbonitrided layer after the carbonitriding. The optimum range of the carbonitriding temperature can be determined by the measurement.

Then, for the inner rings (sample E1 to sample E5 and sample C1 to sample C16), the dimensional change test and the life test were further performed. The results thereof are shown in Table 2 and Table 3.

### <Dimensional Change Test>

In the dimensional change test, the ratio of dimensional change was measured under test conditions shown in Table 4, for the inner rings of examples (sample E1 to sample E5) and comparative examples (sample C1 to sample C16).

[Table 4]

**(Table 4)**

| Sample | 6206 Inner Ring |
|---|---|
| Position of Dimension Measurement | Five positions in total, including three circumferential positions and two axial positions of an inside diameter surface of the inner ring |
| Press-fitconditions | Tensile stress at the time of press fitting of the inner ring: 100 to 150 MPa |
| Test Temperature | 150°C |
| Note | The ratio of dimensional change after 1,000 hours is described in Tables 2 and 3. |

### <Life Test>

Each of the inner rings of examples (sample E1 to sample E5) and comparative examples (sample C1 to sample C16) was combined with an outer ring made of JIS SUJ2 and subjected to usual carbonitriding and balls so as to assemble a ball bearing of model number 6206C3. Then, using the ball bearings, the life test was performed using lubricating oil containing foreign matter. Test conditions are as shown in Table 5.

[Table 5]

**(Table 5)**

| Load | Fr = 9000 N/set |
|---|---|
| Number of Rotations | 2500 rpm |
| Foreign Matter | High-speed steel powder: 0.06 mass% (hardness:730 Hv, particle size: 100 to 150 µm) |
| Lubrication | Turbine oil #68, oil bath (air stirring) |
| Oil Temperature | Natural temperature rising (about 100°C) |
| Calculated Life (Lh) | 67.8 h |
| Test Method | 2 set x 5 times sudden-death test |
| Test Sample Model Number | 6206 |

Incidentally, a tester shown in Table 5 can test two ball bearings at the same time, and the radial load in Table 5 means a radial load for one ball bearing.
Two ball bearings provided with the same inner rings were set on the tester, and a test of measuring the time until either of the inner rings of the ball bearings was damaged was repeated 5 times so as to determine the life L10 estimated as a damage probability of 10% by the Weibull distribution. The ratios in the case where the life of sample C16 as a comparative example is taken as 1 are shown in the standard bearing ratio columns of Table 2 and Table 3. Sample C15 is an example made of JIS SUJ2 as a conventional steel subject to high-concentration carburizing, and sample C16 is an example made of JIS SUJ2 subject to through hardening (hardening temperature: 830°C, oil cooling (oil temperature: 80°C), tempering temperature: 180°C) that has hitherto been widely performed.

As apparent from the results shown in Table 2 and Table 3, it has been revealed that for comparative examples (sample C1 to sample C14) that do not partially satisfy the requirements of claim 1, the life cannot be improved as expected, compared to sample C15 and sample C16.

That is, the sample C1 as a comparative example is a sample in which carbonitriding has been performed on JIS SUJ2 as a conventional steel, and the amount of spherodized carbides before high-concentration carbonitriding is small because the amount of Cr is small, so that deposits after high-concentration carbonitriding decrease, which results in a decrease in the life.
The sample C2 as a comparative example uses steel G containing C in an amount lower than the lower limit of the invention, and the amount of spherodized carbides which form nuclei before high-concentration carbonitriding is small, so that deposits after high-concentration carbonitriding decrease, which results in a decrease in the life.

The sample C3 as a comparative example uses steel H in which C exceeds the upper limit of the invention, so that deposits containing C are coarsened, which results in a decrease in the life, starting therefrom.
The sample C4 as a comparative example uses steel I in which Si is lower than the lower limit, and the amount of Si is small. Accordingly, growth of deposits cannot be inhibited, and the deposits are coarsened, which results in a decrease in the life, starting therefrom.
The sample C5 as a comparative example uses steel J in which Si exceeds the upper limit, and carburizing properties are deteriorated by excessive addition of Si. Accordingly, sufficient C and N concentrations are not obtained, which results in a decrease in the life.

The sample C6 as a comparative example uses steel K in which Mn exceeds the upper limit, and the amount of retained austenite of the inside is substantially increased by addition of a large amount of Mn to increase the ratio of dimensional change, thereby failing to obtain dimensional accuracy. In addition to this, the amount of retained austenite of a surface layer also increase, which fails to obtain the hardness. Accordingly, the life has decreased.
The sample C7 as a comparative example uses steel L in which Cr is lower than the lower limit of the invention, so that the amount of spherodized carbides which form nuclei before high-concentration carbonitriding is small, similarly to sample C1. Accordingly, deposits after high-concentration carbonitriding decrease, which results in a decrease in the life.

The sample C8 as a comparative example uses steel M in which Cr exceeds the upper limit of the invention, so that C deposits are coarsened, resulting in a decrease in the life, starting therefrom.
The sample C9 as a comparative example uses steel N in which O exceeds the upper limit of the invention. Therefore, although all characteristic values satisfy the ranges of the invention, the amount of O is large. The large amount of O causes an increase in non-metal inclusions, which results in a decrease in the life, starting therefrom.

In the sample C10 as a comparative example, the carbonitriding temperature is lower than the lower limit of the invention, so that the C concentration of a surface decreases and the amount of retained austenite decreases, which results in a decrease in the life.
In the sample C11 as a comparative example, the carbonitriding temperature exceeds the upper limit of the invention. Therefore, decomposition of ammonia is accelerated, which fails to obtain the effective N amount. In addition, deposits are coarsened by diffusion promotion of C, which results in a decrease in the life, starting therefrom.

In the sample C12 as a comparative example, the flow rate of NH₃ is lower than the lower limit of the invention, so that the N concentration of a surface decreases, which results in a decrease in the life.
In the sample C13 as a comparative example, the carbonitriding time is lower than the lower limit of the invention, so that diffusion of C and N become insufficient. Therefore, the diffusion of C and N to the inside beyond a processed region after finishing is not sufficient, which decreases the C concentration and N concentration of a surface. As a result, the life is decreased.

The sample C14 as a comparative example is an example different from Example 1 in that only carburizing without nitriding is performed instead of performing the cabonitriding. Therefore, an amount of N forming a solid solution is lost in a material, which decreases the amount of retained austenite. Accordingly, the life was decreased more than Example 1. Further, no existence of the nitride is also considered as one of the causes of a decrease in the life.
The sample C15 and the sample C16 as comparative examples use JIS SUJ2 as a conventional steel, as described above. The sample C16 is an example subject to through hardening having hitherto been widely performed, and sample 15 is an example subject to high-concentration carburizing recently as described above. However, in the Samples, the components are not optimized, and N is not utilized. As a result, the life is largely deteriorated.

Compared to the comparative examples, examples (sample E1 to sample E5) are manufactured such that all of the component range, the amounts of C and N of a surface, the particle size, number and area ratio of deposits, the amount of retained austenite and the surface hardness satisfy the requirements of the invention, thereby indicating the low rate of dimensional change, although the test is made under such severe conditions that the environment contains foreign matter of a high-speed steel powder. As a result, it has been confirmed that the life as excellent as 5.5 to 8.0 times compared to comparative example C16 that is an inner ring prepared by through hardening on JIS SUJ2, which has hitherto been widely performed, is obtained. However, as apparent from comparison of sample E4 of the invention and sample C3, sample C6 and sample C12 of comparative examples with samples except the samples E4, C3, C6 and C12, when the amount of retained austenite of the inside exceeds 15%, the rate of dimensional change tends to increase. It is therefore preferable to adjust the amount of retained austenite to 15% or less.
Although no numerical values are shown in the tables, all of sample E1 to sample E5 had an inside hardness of Hv 700 or more.

From these results, in order to obtain the life, it has been confirmed that it is important to optimize the components as compared to the conventional steel and to obtain a state where the carbide is deposited in large amounts and finely before carbonitriding, and by performing carbonitriding in this state, to secure retained austenite and a large amount of deposits in the surface (carbonitriding layer) of the rolling part after carbonitriding and to suppress the amount of retained austenite in the inside (uncarbonitrided layer) of the rolling part after carbonitriding so as to obtain a state having a high hardness.

## Claims

1. A rolling part comprising a rolling element and a rolling raceway member,
wherein the rolling part is formed by performing spheroidizing annealing, processing, carbonitriding and finishing on a steel material containing C in an amount of 0.90 mass% to 1.10 mass%, Si in an amount of more than 0.35 mass% and up to 0.70 mass%, Mn in an amount of less than 0.80 mass%, Cr in an amount of 1.85 mass% to 2.50 mass%, O in an amount of 12 ppm or less, and a balance of Fe and unavoidable impurities,
wherein a surface of the rolling part contains C in a mean amount of 1.20 mass% to 1.50 mass% and N in a mean amount of 0.10 mass% to 0.60 mass%,
wherein a mean particle size of a carbide, a nitride and a carbonitride as deposits having a particle size of 0.1 µm or more in the surface is 0.6 µm or less, a number thereof is 700,000 particles or more per mm², and an area ratio thereof is 10% or more,
wherein an amount of retained austenite of the surface is from 25 % to 45 % by volume ratio,
wherein a hardness of the surface is Hv 750 or more, and
wherein an uncarbonitrided layer in an inside of the rolling part contains an amount of retained austenite of 20% or less by volume ratio.

2. The rolling part according to claim 1, wherein the steel material contains Cr in an amount of 2.20 mass% or less.

3. The rolling part according to claim 1, wherein the mean amount of N in the surface of the rolling part is 0.30 mass% or less.

4. The rolling part according to claim 1, wherein the amount of retained austenite of the surface of the rolling part is 40% or less by volume ratio.

5. The rolling part according to claim 1, wherein the amount of retained austenite of the inside of the rolling part is 15% or less by volume ratio.

6. A method for manufacturing a rolling part comprising a rolling element and a rolling raceway member, the method comprises:
a spheroidizing annealing step of performing spheroidizing annealing on a steel material containing C in an amount of 0.90 mass% to 1.10 mass%, Si in an amount of more than 0.3 mass5% and up to 0.70 mass%, Mn in an amount of less than 0.80 mass%, Cr in an amount of 1.85 mass% to 2.50 mass%, O in an amount of 12 ppm or less, and the balance of Fe and unavoidable impurities,
a processing step of forming the steel material into a predetermined shape,
a carbonitriding step of performing a treatment at 2 % to 10 % of a ratio of NH₃ gas flow rate to carburizing converted gas flow rate at 830°C to 880°C for 3 hours or more, and
a finishing step.
